# EUROPÄISCHE PATENTANMELDUNG

(11) **EP 2 710 937 A1**
(43) Veröffentlichungstag der Anmeldung: **26.03.2014**
(21) Anmeldenummer: 13184045.6
(22) Anmeldetag: 12.09.2013
(51) Int. Cl.: A47J 31/00

(54) **Haushaltsgerät**

(30) Priorität: 21.09.2012 DE 102012216964
(71) Anmelder: BSH Bosch und Siemens Hausgeräte GmbH, 81739 München (DE)
(72) Erfinder: Franzke, Peter, 83229 Sachrang/Aschau (DE); Schneiderbauer, Gottfried, 84553 Halsbach (DE)

(57) **Zusammenfassung**

Ein modulares Hausgerätesystem aus einem Hausgerät (1), insbesondere einem Getränkezubereitungsgerät für Haushaltszwecke, und aus einer mit dem Hausgerät (1) koppelbaren Verbindungseinheit (2), die über einen Anschluss (21) an ein elektrisches Haushaltsnetz verfügt, wird durch einen zweiten Anschluss (22) an ein Haushaltswassernetz weitergebildet. Die Erfindung betrifft außerdem ein entsprechendes Hausgerät (1) und eine Verbindungseinheit (2).

## Beschreibung

Die Erfindung betrifft ein modulares Hausgerätesystem aus einem Hausgerät und aus einer mit dem Hausgerät koppelbaren Verbindungseinheit, die über einen Anschluss an ein elektrisches Hausnetz verfügt. Das Hausgerät kann insbesondere ein Getränkezubereitungsgerät für Haushaltszwecke, beispielsweise ein Kaffeevollautomat, sein. Über die Verbindungseinheit lässt es sich an ein elektrisches Haushaltsnetz anschließen, so dass es nicht unmittelbar mit ihm verbunden sein muss.

Ein hierarchisches, modulares Getränkeherstellungssystem mit einer Dockingstation und einem Getränkeherstellungsmodul zeigt die EP 1 864 598 B1. Das dortige Getränkeherstellungssystem ist dazu ausgebildet, wahlweise in einem angeschlossenen bzw. einem getrennten Zustand bezüglich der Dockingstation zu sein, wobei das Modul mit einer Einrichtung zur Herstellung eines Getränks aus in einer Kapsel enthaltenen Inhaltsstoffen versehen ist, die Dockingstation und das Modul jeweils mit einem Steuerschaltkreis versehen sind, wobei der Steuerschaltkreis des Moduls zur unabhängigen Steuerung des Moduls im getrennten Zustand ausgelegt ist und der Steuerschaltkreis der Dockingstation so ausgelegt ist, dass er zumindest teilweise die Steuerung des Moduls im angeschlossenen Zustand übernimmt.

Aufgabe der Erfindung ist es, den Anschluss eines elektrisch betriebenen Hausgeräts zu vereinfachen.

Bei dem eingangs genannten modularen Hausgerätesystem wird diese Aufgabe durch einen zweiten Anschluss der Verbindungseinheit an ein Haushaltswassernetz gelöst. Die Verbindungseinheit verfügt folglich nicht nur über eine Anschlussmöglichkeit an ein elektrisches Stromnetz, sondern darüber hinaus über eine Möglichkeit, mit dem Haushaltswassernetz verbunden zu werden und eine fluidische Verbindung zwischen ihm und dem Hausgerät herzustellen. Das Hausgerät verfügt folglich nicht nur über einen entsprechenden elektrischen, sondern auch über einen fluidischen Anschluss an die Verbindungseinheit. Die Erfindung wendet sich also davon ab, die Verbindungseinheit lediglich mit einer Energiezufuhr auszustatten. Sie verfolgt vielmehr das Prinzip, sowohl die Energiezufuhr als auch die Wasserzufuhr zur Verbindungseinheit und damit zu dem daran angeschlossen bzw. gekoppelten Hausgerät zu ermöglichen. Sie erleichtert damit den Anschluss des Hausgeräts erheblich, weil nicht nur der im Allgemeinen einfach herzustellende Stromanschluss, sondern vor allem der aufwändige und für Hausgeräte in der Regel nicht vorgesehene unmittelbare Wasseranschluss erleichtert wird. Mit einem Wasseranschluss in der Verbindungseinheit muss das Hausgerät nicht in der unmittelbaren Nähe einer Haushaltszapfstelle wie einem Spülbecken oder dergleichen platziert werden, um einen direkten Wasseranschluss, ggf. durch provisorische, temporäre und damit unbequeme Montage einer Schlauchleitung an einem Wasserhahn, zu erhalten. Damit kann das Auffüllen eines Vorratsbehälters oder die separate Herstellung einer Verbindung mit einer Wasserleitung entfallen und der Aufstellort für das Hausgerät freier gewählt werden.

Getränkezubereitungsgeräte verbrauchen bei Getränkeherstellung nicht nur Wasser, sondern produzieren oftmals auch Restwasser. Nach einer weiteren vorteilhaften Ausgestaltung der Erfindung kann das modulare Hausgerätesystem daher über einen dritten Anschluss an ein Haushaltsabwassernetz verfügen. Die Verbindungseinheit lässt sich folglich nicht nur an der Wasserversorgung anschließen, sondern auch an eine Wasserentsorgung. Anschlüsse an das Versorgungsnetz einerseits und an das Entsorgungsnetz andererseits liegen in Haushalten ohnehin meist räumlich nahe beieinander. Der zusätzliche Anschluss der Verbindungseinheit an das Entsorgungsnetz kann daher ohne großen zusätzlichen Aufwand hergestellt werden. Auch das Hausgerät verfügt dann vorteilhaft über einen entsprechenden Abwasseranschluss. Nach Kopplung mit der Verbindungseinheit kann damit auch das Hausgerät mit dem Entsorgungsnetz verbunden sein und eine selbsttätige Restwasserentsorgung bieten. Dadurch kann sich eine weitere Bedienertätigkeit erübrigen, nämlich das Entleeren von Restwasserbehältern. Mit dem Entfall dieser Bedienertätigkeit bietet das Hausgerät eine noch bequemere Bedienung.

Sie kann im Falle von abflussgängigen Reststoffen nach einer weiteren vorteilhaften Ausgestaltung der Erfindung noch dadurch gesteigert werden, dass auch sie über den Abwasseranschluss entsorgt werden. Bei Kaffeevollautomaten fällt unter derartige Reststoffe der Trester, der mit Wasser vermischt und ausgespült werden kann. Aufgrund des Anschlusses an das Haushaltswassernetz fällt das dafür erforderliche Spülwasser insofern nicht negativ ins Gewicht, als der Bediener des Hausgeräts den erhöhten Wasserbedarf nicht durch Nachfüllen decken muss.

Nach einer weiteren vorteilhaften Ausgestaltung der Erfindung kann die Verbindungseinheit über einen Geruchsverschluss des Anschlusses an das Haushaltswassernetz verfügen. Somit kann das Austreten unangenehmer Gerüche aus der Abwasserleitung vermieden werden. Er kann jedenfalls solange erforderlich sein, wie kein Hausgerät an der Verbindungseinheit angeschlossen ist. Mit einem eigenen Geruchsverschluss lässt sich die Verbindungseinheit räumlich flexibler an das Abwassernetz anschließen, weil sie nicht mehr auf einen vorhandenen Geruchsverschluss, beispielsweise eines Waschbeckens, angewiesen ist.

Nach einer weiteren vorteilhaften Ausgestaltung der Erfindung kann das System über eine Datenschnittstelle zur zumindest unidirektionalen Übertragung von Daten zwischen der Verbindungseinheit und dem Hausgerät verfügen. Die Datenschnittstelle erfordert nicht unbedingt eine Steckerverbindung oder einen Kontakt, sondern kann auch über geringe Distanzen berührungslos Daten übertragen (unidirektionalen Übertragung) bzw. austauschen (bidirektionale Übertragung). Damit kann eine Kommunikation zwischen dem Hausgerät einerseits und der Verbindungseinheit andererseits ermöglicht werden, beispielsweise um das System mit einer Aqua-Stopp-Funktion auszurüsten. Dazu kann die Verbindungseinheit über eine doppelwandige Leitung als Anschluss zum Haushaltswassernetz verfügen, so dass bei einem Defekt der inneren Leitung über einen Sensor entweder in dem Hausgerät oder in der Verbindungseinrichtung ein Ventil am Haushaltswasseranschluss verschlossen wird. Befindet sich der Sensor in der Verbindungseinheit, so kann an der Datenschnittstelle ein Signal übertragen werden, das den Benutzer am Haushaltsgerät auf die Aktivierung des Aqua-Stopp-Systems hinweist.

Nach einer weiteren vorteilhaften Ausgestaltung der Erfindung kann das Hausgerät mechanisch an die Verbindungseinheit koppelbar sein. Eine einfache mechanische Kopplung kann durch vertikales Aufsetzen des Hausgeräts auf die Verbindungseinheit erfolgen. Damit sinkt die Wahrscheinlichkeit, dass das Hausgerät beispielsweise bei Reinigungstätigkeiten versehentlich von der Verbindungseinheit getrennt wird, denn dazu müsste es unter Überwindung seiner Eigengewichtskraft angehoben werden. Alternativ kann die Kopplung durch ein horizontales Verschieben des Hausgeräts relativ zur Verbindungseinheit erfolgen, was für einen Bediener regelmäßig einfacher ist, weil er dazu nicht das Gewicht des Hausgeräts überwinden muss. Die mechanische Kopplung legt die relative Lage zwischen dem Hausgerät und der Verbindungseinheit zumindest in einer Ebene orthogonal zur Kopplungsrichtung und in, aber nicht unbedingt entgegen der Kopplungsrichtung fest.

Nach einer weiteren vorteilhaften Ausgestaltung der Erfindung kann sie damit nach dem Prinzip einer Stecker-Steckdose-Verbindung eine mechanische Lehre bzw. Schablone bilden. Sie zwingt dazu, zunächst das Hausgerät und die Verbindungseinheit in eine korrekte relative Lage zueinander zu bringen, so dass die Schnittstellen für die elektrischen und fluidischen Anschlüsse zwischen dem Hausgerät und der Verbindungseinheit miteinander fluchten und anschließend zuverlässig miteinander verbunden werden können.

Nach einer weiteren vorteilhaften Ausgestaltung der Erfindung kann das Hausgerätesystem über eine beispielsweise mechanische Trennsperre verfügen, die ein ungewolltes Entkoppeln des Hausgeräts von der Verbindungseinheit verhindert. Dazu kann das Hausgerät an der Verbindungseinheit mechanisch verriegelt werden, beispielsweise durch einen linear verschiebbaren Riegel oder durch einen verdrehbaren Riegel nach dem Prinzip des Bajonettverschlusses.

Nach einer weiteren vorteilhaften Ausgestaltung der Erfindung verfügt das Hausgerätesystem über eine Schutzeinrichtung an der Verbindungseinheit, die einen ungewollten Kontakt mit den unbenutzten Anschlüssen verhindert, wenn das Hausgerät nicht angeschlossen ist. Sie schützt insbesondere den elektrischen Anschluss, weil der Anschluss an das Haushaltswassernetz bei Nichtgebrauch ohnehin gesperrt sein muss. In einem einfachen Fall kann die Schutzeinrichtung in einer versenkt oder vertieft angeordneten Lage der elektrischen Kontakte bestehen, wie beispielsweise bei einer herkömmlichen Steckdose. Eine alternative oder zusätzliche einfache Schutzeinrichtung besteht in einer Abdeckung, die bei Nichtgebrauch auf die Anschlüsse aufgesetzt wird.

Nach einer weiteren vorteilhaften Ausgestaltung der Erfindung kann die Schutzeinrichtung mit der Trennsperre gekoppelt sein, denn die Schutzeinrichtung ist regelmäßig bei Anschluss des Hausgeräts inaktiv, während die Trennsperre aktiv ist. Umgekehrt verhält es sich, wenn das Hausgerät nicht angeschlossen ist. Die Koppelung der Schutzeinrichtung mit der Trennsicherung kann erfolgen, indem die Schutzeinrichtung in einer Verschlussrichtung, in der sie die Anschlüsse verschließt, vorgespannt ist und zum Anschluss des Hausgeräts beispielsweise entgegen einer Federkraft geöffnet werden muss. Nach Kopplung des Hausgeräts kann die vorgespannte Schutzeinrichtung als Trennsicherung in eine Verriegelungsposition einrasten. Mit der Koppelung der Schutzeinrichtung mit der Trennsicherung ergibt sich eine leichtere Bedienung für den Benutzer.

Nach einer weiteren vorteilhaften Ausgestaltung der Erfindung kann das System zusätzlich oder alternativ eine Kindersicherung an den Anschlüssen aufweisen. Damit lässt sich eine höhere Sicherheit gegen versehentlichen Fehlgebrauch oder vorsätzlichen Missbrauch erreichen.

Nach einer weiteren vorteilhaften Ausgestaltung der Erfindung ist die Verbindungseinheit dazu ausgebildet, in einem Möbel, insbesondere in einem Küchenmöbel, einbaubar zu sein. Dazu ist sie kompakt ausgebildet und verfügt über Einrichtungen, mit denen sie am Küchenmöbel oder einer Gebäudewand montierbar ist. Außerdem ist sie dazu optisch zurückhaltend gestaltet, so dass sie bei Nichtgebrauch unauffällig ist. Durch ihr Festlegen an einem Möbel bzw. einer Gebäudewand trägt sie zur einfachen Bedienung bei, weil zur Kopplung des Hausgerätesystems lediglich das Haushaltsgerät bedient werden muss und nicht gleichzeitig auch die Verbindungseinheit.

Nach einer weiteren vorteilhaften Ausgestaltung ist das Haushaltsgerät dazu geeignet bzw. ausgebildet für einen Anschluss an eine Verbindungseinheit eines modularen Hausgerätesystems wie oben beschrieben, wobei das Hausgerät auch selbständig betreibbar ist. Dazu verfügt es über einen herkömmlichen Anschluss für eine Energieversorgung und über einen Vorratsbehälter für Wasser und ggf. über einen Entsorgungsbehälter für Restwasser und dergleichen. Um sowohl selbständig als auch in Verbindung mit der Verbindungseinheit betrieben werden zu können, weist es ein Steigrohr auf, das vom Anschluss an das Haushaltswassernetz kommend im Vorratstank für Frischwasser mündet. Ein ggf. vorhandener Restwasserbehälters kann sich sowohl vom Benutzer separat entnehmen lassen, um geleert zu werden, als auch vom Haushaltsgerät über den Anschluss an das Haushaltsabwassernetz selbsttätig entleeren.

Nach einer weiteren vorteilhaften Ausgestaltung der Erfindung kann die Verbindungseinheit geeignet und dafür ausgebildet sein, an ein Haushaltsgerät eines oben beschriebenen modularen Hausgerätesystems gekoppelt zu werden, wobei es eine Aqua-Stopp-Funktion umfasst und bei Aktivierung ein Signal für das Hausgerät abgibt. Mit der Unterbringung eines Sensors für eine Aqua-Stopp-Funktion in der Verbindungseinheit kann das erfinderische System einfacher ausgeführt werden, weil zum Haushaltsgerät keine doppelwandige Leitungsverbindung hergestellt und keine bidirektionale Daten- bzw. Signalübertragung ermöglicht werden muss. Aufgrund der mechanischen Kopplung des Haushaltsgeräts an der Verbindungseinheit ist ein Versagen des Wasseranschlusses und damit dessen Fehlfunktion äußerst unwahrscheinlich, weshalb die Anordnung des Sensors in der Verbindungseinheit ausreichend sein dürfte. Das Schließen eines Ventils am Anschluss zur Haushaltswasserversorgung wird vorteilhaft an das Hausgerät signalisiert und dort angezeigt, so dass der Benutzer über die Aktivierung der Aqua-Stopp-Funktion informiert ist und entsprechende Maßnahmen ergreifen kann.

Das Prinzip der Erfindung wird nachfolgend anhand einer Zeichnung beispielshalber noch näher erläutert. In der Zeichnung zeigen:
- Figur 1:: einen Kaffeevollautomaten als Haushaltsgerät,
- Figur 2:: einen Schnitt durch eine Kücheneinrichtung,
- Figur 3:: den Kaffeevollautomaten im entkoppelten Zustand,
- Figur 4:: den Kaffeevollautomaten im gekoppelten Zustand in der Kücheneinrichtung,
- Figur 5:: eine Ansicht der Anschlüsse der Verbindungseinheit, und
- Figur 6:: eine Ansicht der Anschlüsse des Kaffeevollautomaten.

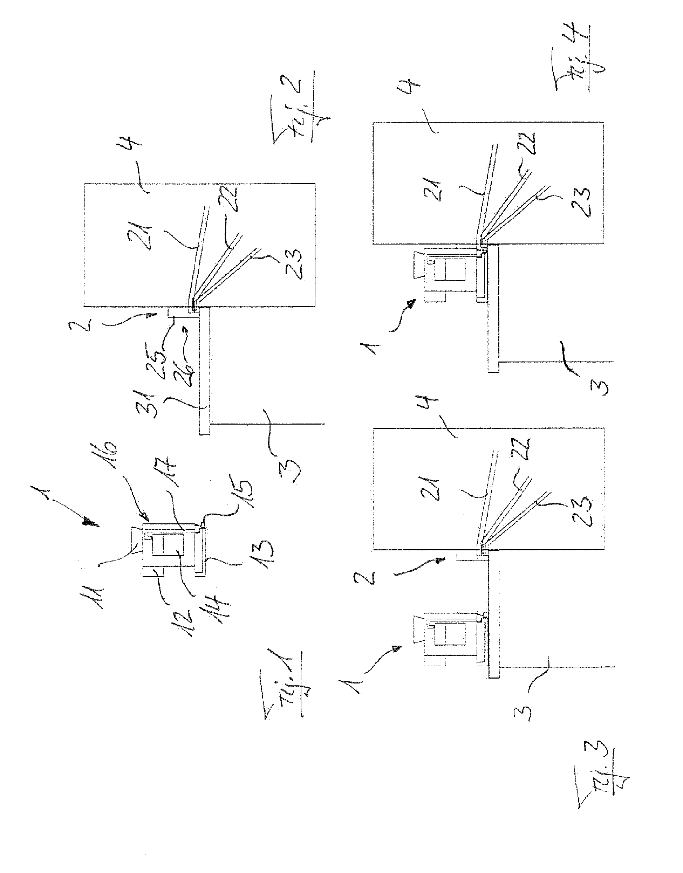

Figur 1 zeigt einen Kaffeevollautomaten 1 als Beispiel für ein Hausgerät, das Bestandteil eines modularen Hausgerätesystems der Erfindung sein kann. Der Kaffeevollautomat 1 ist weitgehend herkömmlich aufgebaut, trägt also auf seiner Oberseite einen Bohnenbehälter 11, auf seiner Front einen Getränkeauslauf 12 und in einem Bodenbereich eine Tropfschale 13. Seitlich ist ein Wasservorratsbehälter 14 angebracht, der zum Befüllen mit Frischwasser abnehmbar ist. Der Kaffeevollautomat 1 verfügt außerdem über einen konventionellen Netzanschluss 15 auf seiner Geräterückseite 16, mit dem der Kaffeevollautomat 1 an ein gewöhnliches Stromnetz angeschlossen werden kann. Damit umfasst der Kaffeevollautomat 1 alle Einrichtungen, um ihn selbständig betreiben zu können.

Erfindungsgemäß weist er jedoch zusätzlich ein Steigrohr 17 auf, das von der Geräterückseite 16 aus in der Nähe des Netzanschlusses 15 beginnend von einer Oberseite in den Wasserbehälter 14 mündet. Zusätzlich weist die Tropfschale 13 einen in Figur 1 nicht erkennbaren Ablaufstutzen auf, der ebenfalls an der Geräterückseite 16 in der Nähe des Netzanschlusses 15 angebracht und fluidisch mit der Tropfschale 13 verbunden ist.

Damit eignet sich der Kaffeevollautomat 1 zum Anschluss an eine Verbindungseinheit 2, die Figur 2 zeigt. Sie ist auf der Oberseite eines Küchenmöbels 3 angebracht, und zwar auf einer Arbeitsplatte 31. Die Verbindungseinheit 2 verfügt über einen Netzanschluss 21, der an ein Haushaltsstromnetz angeschlossen ist. Außerdem ist sie über einen Wasseranschluss 22 an ein Haushaltswassernetz für eine Frisch- bzw. Trinkwasserversorgung angeschlossen. Schließlich umfasst sie einen Abwasseranschluss 23, der eine fluidische Verbindung zu einem Haushaltsabwassernetz herstellt. Die Verbindungseinheit 2 stellt die genannten Anschlüsse 21, 22, 23 in einem kompakten Gehäuse 25 zur Verfügung, das optisch unauffällig gestaltet, an einer Gebäudewand 4 befestigt ist und wenig Platz einnimmt.

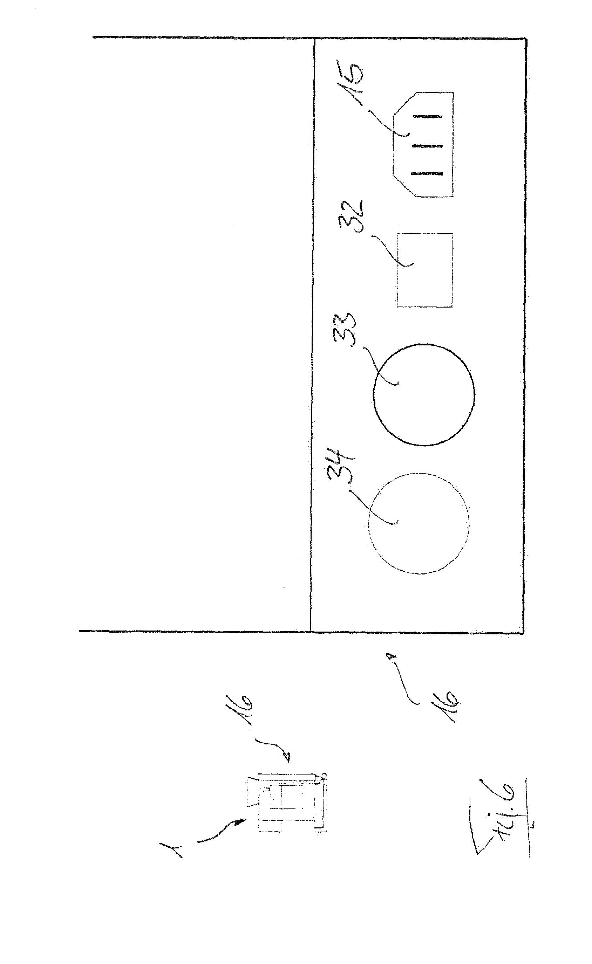

Figur 3 zeigt die Vorbereitung des Kaffeevollautomaten 1 für den Anschluss an die Verbindungseinheit 2. Dazu wird der Kaffeevollautomat 1 auf der Arbeitsplatte 31 abgestellt. Jetzt lässt er sich durch horizontales Verschieben auf die Gebäudewand 4 bzw. auf die Verbindungseinheit 2 hin unmittelbar mit der Verbindungseinheit 2 koppeln, wie es Figur 4 zeigt. Nach dem Prinzip von Stecker und Steckdose dringt die Verbindungseinheit 2 von der Geräterückseite 16 des Kaffeevollautomaten 1 aus zumindest teilweise in dessen Gehäuse ein, um eine elektrische oder fluidische Verbindung zwischen den Anschlüssen 21, 22, 23 einerseits und dem Kaffeevollautomaten 1 andererseits herzustellen. Dazu sind eine Front 26 der Verbindungseinheit 2 und die Geräterückseite 16 des Kaffeevollautomaten 1 komplementär zueinander ausgebildet. Wie eine Stecker-Steckdose-Verbindung müssen sie miteinander zur Deckung bzw. in Eingriff gebracht werden, bevor die Anschlüsse 21, 22, 23 mit ihren Pendants 15, 32, 33, 34 (vgl. Figur 6) an der Geräterückseite 16 des Kaffeevollautomaten 1 in Eingriff kommen.

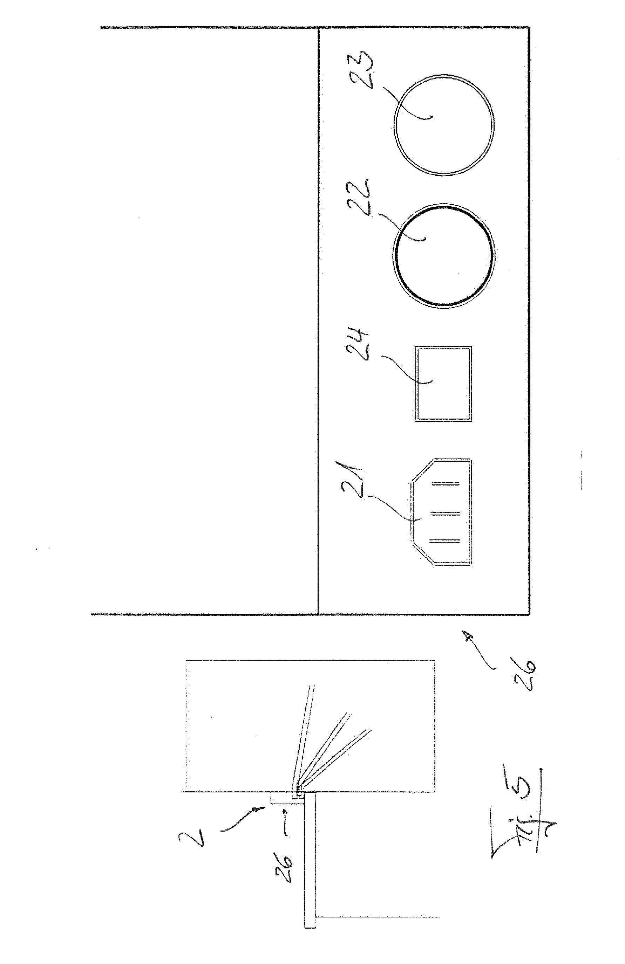

Figur 5 zeigt einen Ausschnitt der Front 26 der Verbindungseinheit 2 mit ihren Anschlüssen: demnach befindet sich auf der linken Seite der Netzanschluss 21, gefolgt von einem Signalanschluss 24, neben dem der Frischwasseranschluss 22 und der Abwasseranschluss 23 angeordnet sind. Die Anschlüsse 21, 22, 23, 24 der Verbindungseinheit 2 sind nach dem Prinzip einer Steckdose bzw. Buchse ausgebildet, also mit nach innen in die Verbindungseinheit 2 hinein weisende Kontaktöffnungen, um insbesondere am Netzanschluss 21 die Gefahr eines versehentlichen Kontakts zu reduzieren.

Figur 6 zeigt eine Ausschnittsansicht der Geräterückseite 16 des Kaffeevollautomaten 1 mit dessen geräteseitigen Anschlüssen. Demnach ist entsprechend seitenverkehrt auf der rechten Seite der Netzanschluss 15 des Kaffeevollautomaten 1 angeordnet, nach links gefolgt vom Signalanschluss 32. Korrespondierend zum Frischwasseranschluss 22 der Verbindungseinheit 2 folgt auf der Geräterückseite 16 der Frischwasseranschluss 33 des Kaffeevollautomaten 1 und der Abwasseranschluss 34. Der Frischwasseranschluss 33 ist an das Steigrohr 17 angeschlossen, das im Wassertank 14 mündet. Der Abwasseranschluss 34 stellt den Ablaufstutzen der Tropfschale 13 gemäß Figur 1 dar. Die geräteseitigen Anschlüsse 15, 32, 33, 34 sind nach dem Prinzip eines Steckers ausgebildet, also mit nach außen weisenden Kontakten, da sie erst beim Verbinden mit einer Buchse spannungs- oder fluidführend werden.

Da es sich bei dem vorhergehenden, detailliert beschriebenen Hausgerätesystem um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen und Positionen der Anschlüsse in anderer Form als in der hier beschriebenen folgen. Ebenso kann die Verbindungseinheit in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 2: Verbindungseinheit
- 3: Küchenmöbel
- 4: Gebäudewand
- 11: Bohnenbehälter
- 12: Getränkeauslauf
- 13: Tropfschale
- 14: Frischwasserbehälter
- 15: Netzanschluss
- 16: Geräterückseite
- 17: Steigrohr
- 21: Netzanschluss
- 22: Frischwasseranschluss
- 23: Abwasseranschluss
- 24: Signalanschluss
- 25: Gehäuse
- 26: Front
- 31: Arbeitsplatte
- 32: Signalanschluss
- 33: Frischwasseranschluss
- 34: Abwasseranschluss

## Patentansprüche

1. Modulares Hausgerätesystem aus einem Hausgerät (1), insbesondere einem Getränkezubereitungsgerät für Haushaltszwecke, und aus einer mit dem Hausgerät (1) koppelbaren Verbindungseinheit (2), die über einen Anschluss (21) an ein elektrisches Haushaltsnetz verfügt, **gekennzeichnet durch** einen zweiten Anschluss (22) an ein Haushaltswassernetz.

2. System nach dem obigen Anspruch, **gekennzeichnet durch** einen dritten Anschluss (23) an ein Haushaltsabwassernetz.

3. System nach Anspruch 1 oder 2, **gekennzeichnet durch** einen Geruchsverschluss des Anschlusses (23) an das Haushaltsabwassernetz.

4. System nach einem der obigen Ansprüche, **gekennzeichnet durch** eine Datenschnittstelle (24, 32) zur Übertragung von Daten zwischen der Verbindungseinheit (2) und dem Hausgerät (1).

5. System nach einem der obigen Ansprüche, **dadurch gekennzeichnet, dass** das Hausgerät (1) mechanisch an die Verbindungseinheit (2) koppelbar ist.

6. System nach einem der obigen Ansprüche, **gekennzeichnet durch** eine Schutzeinrichtung an der Verbindungseinheit (2), die einen ungewollten Kontakt zu den unbenutzten Anschlüssen (21; 22; 23) verhindert.

7. System nach einem der obigen Ansprüche, **gekennzeichnet durch** eine Kindersicherung an den Anschlüssen (21; 22; 23).

8. System nach einem der obigen Ansprüche, **dadurch gekennzeichnet, dass** die Verbindungseinheit (2) in ein Möbel, insbesondere ein Küchenmöbel (3) einbaubar ist.

9. Haushaltsgerät, insbesondere Heißgetränkezubereitungsgerät (1), das geeignet und ausgebildet ist für einen Anschluss an eine Verbindungseinheit (2) eines modularen Hausgerätesystems nach einem der obigen Ansprüche, **dadurch gekennzeichnet, dass** es selbständig betreibbar ist.

10. Verbindungseinheit (2), die geeignet und ausgebildet ist für die Kopplung an ein Haushaltsgerät (1) eines modularen Hausgerätesystems nach einem der obigen Ansprüche, **dadurch gekennzeichnet, dass** es eine Aqua-Stop-Funktion umfasst und bei Aktivierung ein Signal für das Hausgerät (1) abgibt.
